# EUROPÄISCHE PATENTANMELDUNG

(11) **EP 1 530 114 A2**
(43) Veröffentlichungstag der Anmeldung: **11.05.2005**
(21) Anmeldenummer: 04105170.7
(22) Anmeldetag: 20.10.2004
(51) Int. Cl.: G06F 1/00

(54) **Kraftfahrzeug-Informationssystem mit geschützten Dateien**

(30) Priorität: 07.11.2003 DE 10352009
(71) Anmelder: SIEMENS AKTIENGESELLSCHAFT, 80333 München (DE)
(72) Erfinder: Rudolph, Martin, 35585, Wetzlar (DE)

(57) **Zusammenfassung**

Die Erfindung betrifft ein Kraftfahrzeug-Informationssystem mit einer zentralen Recheneinheit (1), sowie einer Eingabeeinheit (2), einer Ausgabeeinheit (3, 4) und einem Speichermedium, die jeweils mit der zentralen Recheneinheit (1) verbunden sind, und Mitteln zur Prüfung einer berechtigten Nutzung von Dateien des Speichermediums in dem Informationssystem. Erfindungsgemäß wird für die Freischaltung der Dateien ein Pre-Paid-System zur Verfügung gestellt, bei dem der Benutzer Freischalteinheiten zur Nutzung auf ausschließlich seinem Informationssystem erwirbt. Die Freischalteinheiten werden dazu codiert übertragen. Das Informationssystem ist daher ausgebildet zum Einlesen eines Codes zur Freischaltung von Dateien für eine Nutzung mit dem Informationssystem, wobei der Code Angaben über eine Anzahl verfügbarer Freischalteinheiten enthält, zur Anzeige von Dateibezeichnungen und zur Auswahl einer freizuschaltenden Datei durch einen Benutzer, und zur Reduzierung der Anzahl der verfügbaren Freischalteinheiten entsprechend von für die Freischaltung der ausgewählten Datei benötigten Freischalteinheiten.

## Beschreibung

Die Erfindung betrifft ein Kraftfahrzeug-Informationssystem mit einer zentralen Recheneinheit, sowie einer Eingabeeinheit, einer Ausgabeeinheit und einem Speichermedium, die jeweils mit der zentralen Recheneinheit verbunden sind, und Mitteln zur Prüfung einer berechtigten Nutzung von Dateien des Speichermediums in dem Informationssystem. Weiterhin betrifft die Erfindung ein Verfahren zur Freischaltung einer auf einem Speichermedium abgespeicherten Datei zur Nutzung durch ein Kraftfahrzeug-Informationssystem durch Auswertung eines Codes.

Derartige Kraftfahrzeug-Informationssysteme liegen in unterschiedlichen Ausführungen vor. Insbesondere gehören dazu Navigationssysteme, Multimediasysteme oder auch kombinierte Radio-Navigationssysteme. Navigationssysteme benötigen für die Routenberechnung Landkarten. Diese sind in der Regel neben anderen Dateien, wie beispielsweise Reise- oder Hotelführern, auf einem Speichermedium abgespeichert. Als Speichermedium werden zunehmend DVD's eingesetzt, die eine hohe Speicherkapazität aufweisen, so dass eine große Datenmenge, gegebenenfalls in komprimierter Form, abgespeichert werden kann. Ein solches Speichermedium kann daher einen hohen Verkaufswert aufweisen. Andererseits ist es inzwischen relativ einfach Kopien von DVD's herzustellen. Es besteht deshalb ein Bedarf Programme oder Dateien auf einer DVD nur für registrierte Anwender freizugeben.

Auf einer einzigen DVD können mehrere Programme oder Daten, beispielsweise die Straßenkartendaten von Europa, vorhanden sein. Dieser komplette Datensatz ist jedoch für viele Autofahrer nicht erforderlich. Daher ist es weiterhin von Interesse nur einzelne oder eine bestimmte Anzahl von Dateien, wie beispielsweise die Straßenkartendaten eines Landes, für einen bestimmten Anwender freizugeben, insbesondere auch für einen zeitlich beschränkten Zeitraum. Die freigegebenen Daten sollen wiederum nur von einem berechtigten und registrierten Benutzer nutzbar sein.

Aus der EP 1 139 064 A1 ist ein Kraftfahrzeug-Informationssystem und ein Verfahren bekannt, bei dem nur einem berechtigten Benutzer die Nutzung bestimmter Straßenkartendaten oder Programme, die auf einer CD-ROM oder DVD abgespeichert sind, möglich ist. Um dies zu erreichen, enthält das Kraftfahrzeug-Informationssystem Mittel zur Prüfung einer berechtigten Nutzung von Dateien des Massenspeichermediums. Hierdurch kann geprüft werden, ob es sich bei dem Nutzer der Dateien um einen berechtigten Nutzer handelt. Handelt es sich nicht um einen berechtigten Nutzer, so hat dieser keinen Zugriff auf die Dateien des Speichermediums. Somit kann eine CD-ROM oder eine DVD, die die Dateien enthält, zwar in beliebiger Weise kopiert und verteilt werden, jedoch können die Daten nur in einem berechtigten System ausgelesen werden. Der berechtigte Nutzer kann sich jederzeit einzelne Dateien, gegebenenfalls auch nur für einen beschränkten Zeitraum, freischalten lassen.

Aus der nicht vorveröffentlichten europäischen Patentanmeldung EP 0 201 9429.0 der Anmelderin wird ein Navigationssystem und ein Verfahren beschrieben, das eine kryptographisch sichere, zeitlich begrenzte und Geräte individuelle Freischaltung von Daten und Funktionen ermöglicht. Insbesondere wird dort die Generierung einer gerätespezifischen Identifizierungsnummer und eines Registrierungsschlüssels für das Gerät näher dargelegt.

Bei diesen bekannten Verfahren und Navigationssystemen wendet sich der Benutzer stets unmittelbar bevor eine Datei freigeschaltet werden soll an eine Zentralstelle, die einen entsprechenden Schlüssel generiert und an den Nutzer übermittelt. Der Benutzer muss dabei genau angeben welche Dateien für gegebenenfalls welchen Zeitraum er freigeschaltet haben möchte.

Aufgabe der Erfindung ist es ein Kraftfahrzeug-Informationssystem der eingangs beschriebenen Art bzw. ein Verfahren derart weiter zu entwickeln, dass eine größere Benutzerfreundlichkeit und eine einfachere Freischaltung von Dateien durch den Benutzer unter Beibehaltung der Nutzung von Dateien nur durch einen berechtigten Benutzer in einem bestimmten Gerät erreicht wird.

Die Aufgabe wird durch ein Kraftfahrzeug-Informationssystem bzw. ein Verfahren mit den in den unabhängigen Patentansprüchen angegebenen Merkmalen gelöst.

Ein gattungsgemäßes Kraftfahrzeug-Informationssystem ist daher erfindungsgemäß derart weitergebildet, dass das Informationssystem ausgebildet ist
- zum Einlesen eines Codes zur Freischaltung von Dateien für eine Nutzung mit dem Informationssystem, wobei der Code Angaben über eine Anzahl verfügbarer Freischalteinheiten enthält,
- zur Anzeige von Dateibezeichnungen und zur Auswahl einer freizuschaltenden Datei durch einen Benutzer, und
- zur Reduzierung der verfügbaren Freischalteinheiten entsprechend von für die Freischaltung der ausgewählten Datei benötigten Freischalteinheiten.

Ein Verfahren zur Freischaltung von auf einem Speichermedium abgespeicherter Dateien zur Nutzung durch ein Kraftfahrzeug-Informationssystem durch Auswertung eines Codes ist erfindungsgemäß derart ausgestaltet, dass
- ein erster Code in das Informationssystem eingelesen wird, der eine Gerätekennung des Informationssystems und eine Anzahl von Freischalteinheiten enthält,
- auf einer Anzeigeeinheit des Informationssystems Dateikennzeichnungen zu Dateien angezeigt werden, die mittels des ersten Codes freigeschaltet werden können,
- nach Auswahl einer der Dateien die ausgewählte Datei für die Nutzung mit dem Informationssystem freigeschaltet wird,
- aus dem ersten Code ein zweiter Code generiert wird, der die Gerätekennung und eine zweite Anzahl von Freischalteinheiten enthält, die aus der Anzahl von ersten Freischalteinheiten und von für die Freischaltung der ausgewählten Datei benötigten Freischalteinheiten bestimmt wird,
- der zweite Code anstelle des ersten Codes abgespeichert wird.

Das erfindungsgemäße Kraftfahrzeug-Informationssystem bzw. Verfahren ist daher nach Art einer Pre-Paid-Funktion ausgestaltet. Der Code für die Freischaltung für Dateien kann prinzipiell wie aus den zuvor genannten Druckschriften bekannt aufgebaut und eingesetzt werden. Im Unterschied zu den bekannten Navigationssystemen und Verfahren enthält der Code nunmehr aber nicht eine Festlegung auf eine spezielle Datei, sondern vielmehr eine Angabe über eine Anzahl von Freischalteinheiten, die für die Freischaltung entsprechender Dateien genutzt werden kann. Somit ist es nicht erforderlich, dass sich der Benutzer bei der Anforderung der Freischalteinheiten bereits konkret auf Dateien festlegt, die für ihn freigeschaltet werden sollen. Vielmehr kann der Benutzer die Freischalteinheiten zu einem beliebigen Zeitpunkt und für die Freischaltung von erst später von ihm festzulegende Dateien verwenden. Der Benutzer kann somit beispielsweise eine beliebige Menge an Freischalteinheiten erwerben und diese dann bei Bedarf einsetzen, beispielsweise für die Freischaltung der Landkartendaten eines bestimmten Landes bei einer kurzfristig anstehenden Dienstreise. Eine Kontaktaufnahme mit der Zentralstelle unmittelbar vor der Freischaltung der Datei ist dann nicht erforderlich.

Zur Freischaltung einer Datei wird der Code dann in das Informationssystem lediglich eingelesen und aus den auf einer Anzeigeeinheit angezeigten Dateien, die mittels des Codes freigeschaltet werden können, kann der Benutzer seine Auswahl treffen. Nachdem der Benutzer seine Wahl getroffen hat, wird die gewünschte Datei unmittelbar zur Benutzung freigeschaltet und die Anzahl der verfügbaren Freischalteinheiten wird entsprechend der für die Freischaltung der ausgewählten Datei benötigten Freischalteinheiten reduziert. Das Gerät erstellt hierbei einen neuen Code, der die Anzahl der noch verfügbaren Freischalteinheiten enthält, und speichert den neuen Code anstelle des vorherigen Codes ab.

Enthält der Code eine Gerätekennung des Informationssystems, so kann erreicht werden, dass die Dateien nur für die Nutzung auf einem einzigen Informationssystem freigeschaltet werden. Insbesondere kann der Code gerätespezifisch verschlüsselt sein, wobei die Entschlüsselung ausschließlich vom zugehörigen Informationssystem vorgenommen werden kann. Somit kann ein kopiertes Speichermedium nicht auf anderen Informationssystemen illegal genutzt werden.

Zur Erstellung eines Codes können grundsätzlich die aus der EP 1 139 064 A1 und der europäischen Patentanmeldung 02 019 429.0 bekannten kryptographischen Verfahren eingesetzt werden, wobei der Code jedoch anstelle von Angaben über eine spezielle freizuschaltende Datei Angaben über eine Anzahl von Freischalteinheiten enthält.

Das Informationssystem ist insbesondere als Navigationssystem ausgebildet oder enthält ein derartiges Navigationssystem, wobei die Dateien Landkartendaten enthalten. Die Aktualisierung von Landkartendaten ist sehr zeitaufwendig und kostenintensiv, so dass ein Speichermedium mit Landkartendaten zu einem umfangreichen geographischen Gebiet, wie beispielsweise Europa, einen erheblichen Wert darstellt und entsprechend teuer ist. Der Nutzer kann sich daher nur die von ihm benötigten Landkartendaten freischalten lassen, wodurch für den Nutzer geringere Kosten entstehen.

In einer anderen Ausführungsform ist das Informationssystem als Rundfunkempfänger ausgebildet oder enthält einen derartigen Rundfunkempfänger, wobei die Dateien kostpflichtige Verkehrsinformationen enthalten. Die Erfassung und Verteilung von Verkehrsinformationen erfolgt z. Z. meist noch kostenfrei. Um jedoch die Genauigkeit und Aktualität der Verkehrsinformation zu steigern sind entsprechend aufwendige Verkehrsbeobachtungsmaßnahmen erforderlich. Um den Nutzern an diesen Kosten zu beteiligen, können die Verkehrsinformationen daher verschlüsselt übertragen werden, so dass nur ein berechtigter Nutzer, der über den entsprechenden Schlüssel verfügt, diese entschlüsseln und nutzen kann. Auch hierfür kann das erfindungsgemäße Verfahren eingesetzt werden. Durch Nutzung der mit dem Code übermittelten Freischalteinheiten kann der Benutzer die verschlüsselten Verkehrsinformationen sich für einen bestimmten Zeitraum verfügbar machen. Der Benutzer kauft also wiederum eine bestimmte Anzahl von Freischalteinheiten, die nur auf seinem Gerät nutzbar sind und setzt diese nach Belieben zur Nutzung der verschlüsselten Verkehrsinformationen ein.

In einer bevorzugten Ausführungsform ist die Anzahl der verfügbaren Freischalteinheiten in dem Code verschlüsselt abgespeichert. Hierdurch kann einem unberechtigten Kopieren bzw. einer Manipulation der Freischalteinheiten entgegengewirkt werden.

In einer besonderen Ausführungsform sind die Dateien in Gruppen zusammengestellt und der Code berechtigt zur Freischaltung von einer oder mehreren Dateien einer der Gruppen. Hierdurch kann beispielsweise zwischen Daten verschiedener Diensteanbieter unterschieden werden, wobei der Nutzer Freischalteinheiten für Dateien eines bestimmten Diensteanbieters bezieht. Mit diesen Freischalteinheiten kann der Nutzer dann auch nur Dateien dieses einen Diensteanbieters freischalten. Durch diese Ausgestaltung ist es möglich Dateien verschiedener Diensteanbieter auf einem Speichermedium abzuspeichern und dennoch sicherzustellen, dass der jeweilige Diensteanbieter entsprechend einer Freischaltung der von ihm zur Verfügung gestellten Dateien entlohnt wird.

In einer weiteren Ausführungsform ist vorgesehen, dass die Dateien für auswählbare Zeiträume freischaltbar sind und unterschiedlichen Zeiträumen unterschiedliche Freischalteinheiten zugeordnet sind. Der Nutzer kann sich somit eine Datei tageweise, wochenweise oder auch monatsweise freischalten lassen, wobei die Anzahl der Freischalteinheiten und damit die jeweiligen Kosten von der Dauer der Freischaltung abhängig sind. Die Freischaltung ist somit speziell auf die Bedürfnisse des einzelnen Benutzers abgestellt und der Benutzer zahlt auch nur für die Nutzung der Dateien in den von ihm gewünschten Zeiträumen.

In einer weiteren Ausgestaltung enthält das Informationssystem eine Schnittstelle zum Einlesen des Codes von einem externen Gerät. Bei dieser Ausgestaltung entfällt die Notwendigkeit einer manuellen Eingabe des Codes in das Informationssystem. Vielmehr wird der Code über die Schnittstelle direkt in das Informationssystem eingelesen. Beispielsweise kann das Informationssystem hierzu eine abnehmbare Teileinheit enthalten, die mit einem Speichermedium ausgestattet ist. Die abnehmbare Teileinheit kann über eine serielle Schnittstelle mit einem Heimcomputer oder dergleichen verbunden werden, der seinerseits über das Internet mit der Zentralstelle verbunden ist. Von der Zentralstelle wird der angeforderte Code über den Heimcomputer in das Speichermedium der abnehmbaren Teileinheit überspielt. Wird nun die abnehmbare Teileinheit wieder mit dem Informationssystem im Kraftfahrzeug verbunden, so kann der Code ohne manuelle Eingabe unmittelbar für die Freischaltung von Dateien genutzt werden.

Die abnehmbare Teileinheit, die das Speichermedium für den Code enthält kann insbesondere eine Frontblende oder Teil einer Frontblende des Informationssystems sein.

In einer anderen Ausgestaltung enthält das Informationssystem ein Speicherkartenlesegerät zum Einlesen des Codes von einer Speicherkarte. Der Code wird hierbei auf der Speicherkarte abgespeichert. Dies kann beispielsweise bei einem Händler, in einer Mietwagenzentrale oder dergleichen geschehen. Ein Mietwagennutzer erhält beispielsweise zusammen mit den Wagenpapieren die Speicherkarte, die er dann lediglich noch in das Speicherkartenlesegerät des Kraftfahrzeug-Informationssystems einsetzen muss. Der Code für die Freischaltung der von dem Mieter gewünschten Landkartendaten wird dann direkt von der Speicherkarte in das Informationssystem eingelesen. Auch hierbei entfällt die manuelle Eingabe des Codes.

In einer anderen Ausgestaltung ist vorgesehen, dass das Informationssystem ein Mobilfunkmodul zum Einlesen des Codes enthält. Bei dieser Ausgestaltung wird der Code unmittelbar über eine Mobilfunkverbindung von der Zentralstelle zu dem Kraftfahrzeug-Informationssystem übermittelt.

Zur Anforderung eines Codes zur Freischaltung von Dateien übermittelt der Benutzer eine Gerätekennung des Informationssystems, beispielsweise in Form eines Geräteschlüssels, und eine gewünschte Anzahl von Freischalteinheiten an die Zentralstelle. In der Zentralstelle wird daraufhin ein erster Code festgelegt, der die Gerätekennung und die Anzahl der Freischalteinheiten enthält. Anschließend wird der erste Code von der Zentralstelle an den Benutzer zur manuellen Eingabe in das Kraftfahrzeug-Informationssystem übermittelt oder vorzugsweise auf ein Speichermedium übertragen. Bei dem Speichermedium kann es sich, wie oben bereits erwähnt, insbesondere um eine Speicherkarte oder ein Speichermedium in einer abnehmbaren Teileinheit des Informationssystems handeln. Die Übertragung des Codes erfolgt dabei entweder drahtgebunden über eine WAN-Verbindung, beispielsweise über das Internet, oder über eine drahtlose Verbindung, beispielsweise über ein Mobilfunknetz. Dem Benutzer werden dabei die Freischalteinheiten in Rechnung gestellt und der erforderliche Betrag beispielsweise von einer Kreditkarte abgebucht.

Für den Fall, dass der Benutzer zu viele Freischalteinheiten eingekauft hat, ist in einer besonderen Ausführungsform vorgesehen, dass der Code, der die Information über die Anzahl der Freischalteinheiten enthält, an die Zentralstelle zurück übertragen wird und auf dem Speichermedium gelöscht wird. Der Nutzer kann nach dem Löschen des Codes diesen nicht mehr für die Freischaltung von Dateien verwenden, so dass ihm die Kosten für die zurückgegebenen Freischalteinheiten von der Zentralstelle zurückerstattet werden können.

Die Erfindung wird nachfolgend anhand eines Ausführungsbeispiels und der Zeichnung näher erläutert. Es zeigen:
- Figur 1: ein Kraftfahrzeug-Navigationssystem zur Durchführung des erfindungsgemäßen Verfahrens
- Figur 2: eine Systemübersicht für das Abrufen eines Codes
- Figur 3: ein Ablaufdiagramm für die Auswahl von Dateien

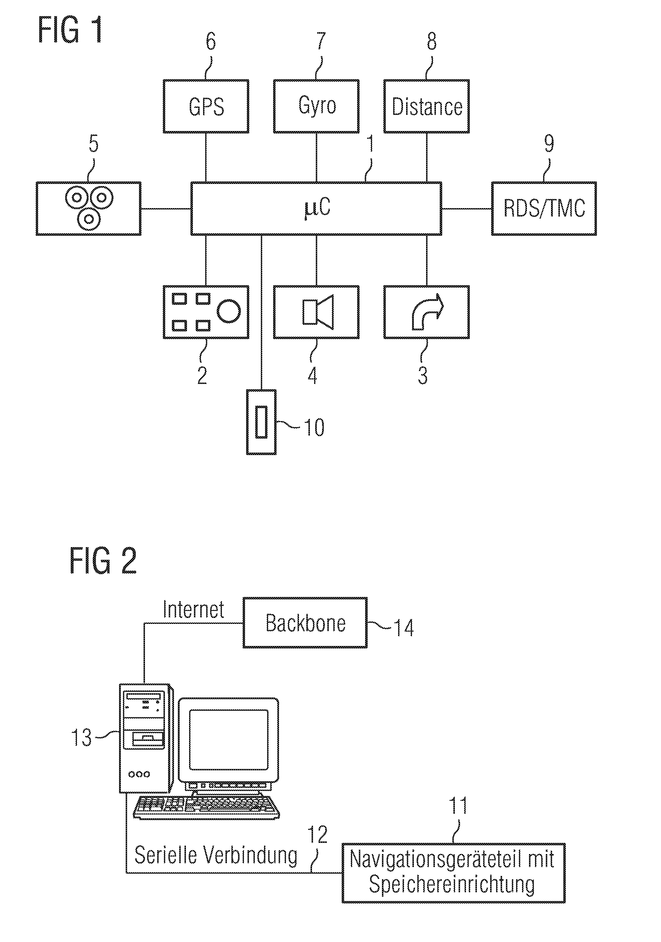

Figur 1 zeigt ein erfindungsgemäß ausgestattetes Navigationssystem. Zentraler Bestandteil ist die Recheneinheit 1, die mit ihrem Arbeitsspeicher und einem nicht-flüchtigen Festwertspeicher den Navigationsrechner bildet. Mit der zentralen Recheneinheit 1 ist eine manuelle Eingabeeinheit 2 verbunden, über die die Eingabe eines Zielortes sowie die Auswahl der gewünschten freizuschaltenden Dateien erfolgen kann. Alternativ oder zusätzlich zu einer manuellen Eingabeeinheit kann eine Spracheingabeeinheit vorgesehen sein. Das Navigationssystem weist ferner eine optische Ausgabeeinheit 3 sowie eine akustische Ausgabeeinheit 4 auf, über die jeweils Zielführungsinformationen ausgegeben werden können. Auf der optischen Ausgabeeinheit 3 wird zudem die Dateiauswahl zur Auswahl einer freizuschaltenden Datei angezeigt. Weiterhin weist das Navigationssystem ein Lesegerät 5 auf, das mit der zentralen Recheneinheit verbunden ist und zum Auslesen von Dateien aus einer CD-ROM und/oder einer DVD ausgelegt ist. Auf der CD-ROM bzw. DVD sind die geschützten Dateien abgespeichert, die nur nach entsprechender Freischaltung auf dem Informationssystem nutzbar sind.

Zur Positionsbestimmung weist das Navigationssystem weiterhin einen GPS-Empfänger 6 auf, mit dem entsprechende Satellitensignale empfangen und zur Positionsbestimmung an die zentrale Recheneinheit 1 weitergeleitet werden. Um eine von Satelliten unabhängige Positionsbestimmung vornehmen zu können, weist das Navigationssystem darüber hinaus einen Richtungssensor 7 sowie einen Wegstreckensensor 8 auf. Zur Durchführung einer dynamischen Navigation unter Einbeziehung von Verkehrsmeldungen ist das Navigationssystem ferner mit einem Rundfunkempfänger 9 verbunden, der zum Empfang von Verkehrsmeldungen, beispielsweise RDS/TMC-Meldungen ausgelegt ist. Über den Rundfunkempfänger 9 werden auch verschlüsselte Verkehrsmeldungen empfangen, die erste nach entsprechender Freischaltung genutzt werden können, und auf einem Speicherelement abgespeichert.

Das Navigationssystem weist weiterhin ein Speicherkartenlesegerät 10 auf, das mit der Recheneinheit 1 verbunden ist. Mittels des Speicherkartenlesegeräts 10 können Daten, insbesondere ein Code für die Freischaltung für Dateien, von einer Speicherkarte in das Navigationssystem eingelesen werden. Hierdurch kann die manuelle Eingabe eines Codes für die Freischaltung von Dateien in das Navigationssystem entfallen. Alternativ oder zusätzlich kann das Navigationssystem mit einem Mobilfunkmodul versehen sein, über das ein Code für die Freischaltung von Dateien direkt von einer Zentralstelle über eine Mobilfunkverbindung an das Navigationssystem übermittelt wird.
In einer weiteren alternativen und nicht dargestellten Ausführungsform kann das Navigationssystem auch eine abnehmbare Teileinheit, insbesondere in Form einer Frontblende oder eines Teils einer Frontblende enthalten, wobei die abnehmbare Teileinheit ein Speichermodul enthält, in das ein Code zur Freischaltung der Dateien über eine Schnittstelle, beispielsweise eine serielle Schnittstelle oder eine USB-Schnittstelle, von einem externen Informationssystem übertragen wird.

Die Prüfung einer berechtigten Nutzung von Dateien der CD-ROM oder DVD erfolgt mittels eines geeigneten Computerprogramms.

Bereits während der Produktion des Navigationssystems wird vorzugsweise ein Kommunikationsschlüssel erzeugt, wie dies insbesondere in der Europäischen Patentanmeldung 02 019 429.0 beschrieben ist. Zur Erzeugung des Schlüssels wird beispielsweise von einem zufälligen Startwert ausgegangen, der von einem Rechnersystem zur Verfügung gestellt wird und während der Produktion des Geräts über eine externe Schnittstelle in das Gerät geladen wird. Zur Erhöhung der Sicherheit werden weitere geräteinterne Zufallswerte für die Generierung des Kommunikationsschlüssels herangezogen. Nach Erzeugung wird der geheimzuhaltende Kommunikationsschlüssel des Geräts in Form eines Registrierungsschlüssels, der durch Verschlüsselung des Kommunikationsschlüssels erstellt wird, an den Zentralrechner übermittelt. Alternativ kann der Registrierungsschlüssel auch von dem Benutzer selbst nach Kauf des Gerätes angegeben und in einem Zentralrechner abgelegt werden. Der Benutzer muss dann bei der erstmaligen Benutzung des Gerätes eine Registrierung seines Gerätes in einer Zentralstelle durchführen. Für die Identifizierung des Gerätes dient eine beispielsweise achtstellige gerätespezifische Gerätekennung, die im Registrierungsschlüssel mit übertragen wird und über die eine Zuordnung zum Gerät und damit in der Datenbank der Zentralstelle gespeicherten Kommunikationsschlüssel möglich ist.

Der Erwerb von Freischalteinheiten erfolgt über Benutzerschnittstellen der Zentralstelle, die beispielsweise vom Endkunden direkt (z. B. per Internetzugriff) oder indirekt (z. B. per Fax, Telefon oder Call-Center) erreichbar sind. Nach Übermittlung der gewünschten Freischalteinheiten und der Zahlungsweise wird dem Benutzer ein Code übermittelt, der in verschlüsselter Weise die Gerätekennung des Navigationssystems und die Anzahl der Freieinheiten enthält. Der Code wird wie oben bereits beschrieben beispielsweise auf einer Speicherkarte abgespeichert und ist über das Speicherkartenlesegerät 10 in das Navigationslesegerät einlesbar. Das Abspeichern des Codes auf die Speicherkarte kann bei direktem Zugriff auf die Zentralstation nach elektronischer Übermittlung an einem PC erfolgen oder bei indirektem Zugriff in der Zentralstation, wobei im letzterem Falle die Speicherkarte per Post übersandt werden kann.

Figur 2 zeigt eine andere Möglichkeit zur Anforderung und Übertragung eines Freischaltcodes. Hierzu wird die Frontblende 11 des Navigationssystems, die abnehmbar ist und ein Speicherelement sowie eine serielle Schnittstelle enthält, über eine serielle Verbindung 12 mit einem PC 13 verbunden. Mittels des PC 13 wird über das Internet eine Verbindung zur Zentralstelle 14 hergestellt. Der Benutzer übermittelt hierbei die Kenndaten für das Navigationssystem (Gerätenummer), die Anzahl der gewünschten Freischalteinheiten, sowie die gewünschte Zahlungsweise. In der Zentralstelle 14 wird ein erster Code bestimmt, der in verschlüsselter Weise die Gerätenummer und die Anzahl der Freischalteinheiten enthält. Dieser Code wird über die Internetverbindung an den PC 13 und von dort über die serielle Verbindung 12 in das Speicherelement der Frontblende 11 des Navigationssystems übertragen. Nach Verbinden der Frontblende 11 mit dem Navigationssystem im Fahrzeug kann der Code für die Freischaltung der Dateien nunmehr direkt von dem Navigationsrechner 1 ausgelesen werden.

Wünscht der Benutzer nun die Freischaltung einer auf DVD gespeicherten Datei, so legt er diese DVD in das Lesegerät 5 ein und ruft über ein Menü des Navigationssystems den entsprechenden Eingabedialog auf.

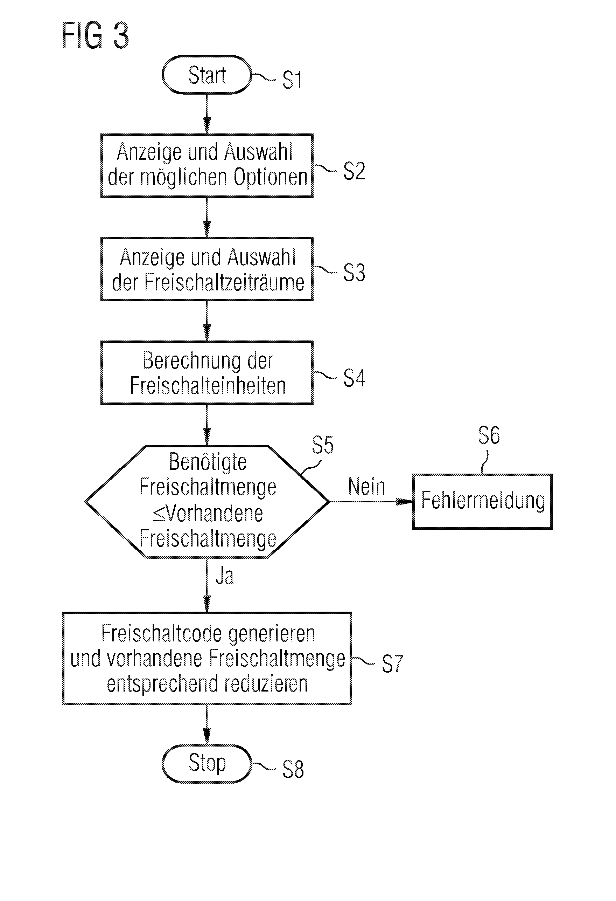

Figur 3 zeigt ein entsprechendes Ablaufdiagramm. Nach dem Start des Eingabedialogs in Schritt S1 werden in Schritt S2 dem Benutzer mögliche Optionen angezeigt und zur Verfügung gestellt. Bei den Optionen kann es sich beispielsweise um Dateien unterschiedlichen Inhalts, wie Landkartendaten, Hotelführern, Restaurantführern oder Verkehrsinformationen handeln. Nach Auswahl einer entsprechenden Gruppe werden dem Benutzer die zu dieser Gruppe gehörenden Dateien angezeigt. Nach Auswahl einer Datei oder auch mehrerer Dateien werden dem Benutzer verschiedene Freischaltzeiträume für die ausgewählte Datei zur Verfügung gestellt (Schritt S3). Der Benutzer wählt den gewünschten Freischaltzeitraum aus und schließt den Eingabevorgang ab. Darauf hin erfolgt in Schritt S4 eine Berechnung der erforderlichen Freischalteinheiten für die Freischaltung der gewünschten Datei für den gewünschten Freischaltzeitraum. In Schritt S5 wird geprüft, ob die benötigte Freischaltmenge kleiner oder gleich der vorhandenen Freischaltmenge ist. Die vorhandene Freischaltmenge wird dabei aus dem auf der Speicherkarte abgespeicherten Code ausgelesen. Ist die benötigte Freischaltmenge größer als die vorhandene Freischaltmenge, so erfolgt in Schritt S6 eine entsprechende Fehlermeldung. Andernfalls wird in Schritt S7 die ausgewählte Datei für die Benutzung durch das Informationssystem durch Erzeugung eines entsprechenden Freischaltcodes freigeschaltet und gleichzeitig die vorhandene Freischaltmenge entsprechend reduziert. Hierzu wird aus dem ersten Code ein zweiter Code generiert, der nunmehr die neue Freischaltmenge enthält, die sich aus der ursprünglichen Freischaltmenge abzüglich der benötigten Freischaltmenge bestimmt. In Schritt S8 wird das Verfahren beendet und der Benutzer kann nunmehr die mit einem entsprechendem Freischaltcode versehene, von ihm ausgewählte Datei, beispielsweise Landkartendaten eines speziellen Landes, verwenden.

Tabelle 1 zeigt beispielhaft die wählbaren Optionen (Dateien) einer DVD für das Navigationssystem. In einer ersten Spalte ist dazu der jeweilige Informationsanbieter (Lieferant) angegeben. Im Beispiel der Tabelle 1 sind dies die Anbieter A, B, C und D. Die zweite Spalte zeigt die Dateikennzeichnungen an, während die dritte Spalte eine Information zu einer Kategorie enthält. Mittels dieser Kategorie sind den einzelnen Dateien unterschiedliche Freischalteinheiten und damit Kosten zugeordnet, wie später noch näher erläutert wird.

Auf der DVD sind gemäß Tabelle 1 somit beispielsweise Kartendaten zu Österreich des Anbieters A sowie des Anbieters B vorhanden, die jeweils in die Kostenkategorie 1 fallen. Weiterhin sind ebenfalls von diesen beiden Anbietern Kartendaten für die die Benelux-Staaten vorhanden, die in die Kostenkategorie 3 fallen. Neben weiteren Kartendaten der Anbieter A und B ist von dem Anbieter C ein Hotel- und Restaurantführer für Deutschland vorhanden, dem die Kostenkategorie 2 zugeordnet ist. Ein Anbieter D stellt schließlich Verkehrsinformationen für Großbritannien zur Verfügung, denen die Kostenkategorie 4 zugeordnete ist. Diese Verkehrsinformationen sind selbstverständlich nicht auf der DVD vorhandene, sondern werden stets aktualisiert über den Rundfunkempfänger empfangen.

Die Verkehrsinformationen können verschlüsselt sein und können nur bei entsprechender Freischaltung eines Entschlüsselungsprogramms genutzt werden. In einer anderen Ausführungsform werden die Verkehrsinformationen unverschlüsselt übertragen, für die Auswertung der Verkehrsinformationen sind jedoch Zusatzinformationen, beispielsweise zusätzliche Tabellen, erforderlich, die auf der DVD vorhanden sind. Diese Zusatzinformationen können wie die Kartendaten nur genutzt werden, wenn sie freigeschaltet sind.

Tabelle 2 zeigt nun eine Zuordnung der erforderlichen Freischalteinheiten zu den verschiedenen Kostenkategorien und Freischaltzeiträumen. In der linken Spalte sind die einzelnen Kostenkategorien aufgeführt. Die mittlere Spalte weist die einzelnen Freischaltzeiträume auf, während die rechte Spalte die zugehörigen Freischalteinheiten enthält. Somit sind beispielsweise für die Freischaltung der Karte für Österreich der Preiskategorie 1 (vgl. Tabelle 1) für einen Freischaltzeitraum von einem Monat gemäß Tabelle 2 zwanzig Freischalteinheiten erforderlich. In einem weiteren Beispiel sind für die Freischaltung des Hotel- und Restaurantführers Deutschland, der der Preiskategorie 2 zugeordnet ist (Tabelle 1), für die Freischaltung für die Dauer eines Monates gemäß Tabelle 2 fünfzehn Freischalteinheiten erforderlich.

Wie aus Tabelle 1 ersichtlich ist werden die unterschiedlichen Dateien von verschiedenen Anbietern zur Verfügung gestellt. Um nun auch eine entsprechende Vergütung der Dienstanbieter vornehmen zu können, ist vorgesehen, dass der Code für die Freischaltung der Dateien auch eine Kennung für den entsprechenden Dienstanbieter aufweist. In diesem Fall muss der Benutzer somit bereits beim Einkauf der Freischalteinheiten angeben Informationen welchen Anbieters er nutzen möchte.

Mit der Erfindung wird die Nutzung von Navigationssystemen und ähnlichen Kraftfahrzeug-Informationssystemen, die Informationen kommerzieller Dienstanbieter nutzen, weiter vereinfacht, in dem eine Pre-Paid-Funktion derart integriert wird, dass ein Benutzer gerätespezifische Freischalteinheiten von einer Zentralstelle erwerben und zur Freischaltung unterschiedlicher Dateien einsetzten kann, ohne dass sich der Benutzer bereits beim Erwerb der Freischalteinheiten auf eine spezielle Datei oder einen speziellen Freischaltzeitraum festlegen muss.

**Tabelle 1**

| ***Lieferant*** | ***Datei*** | ***Kategorie*** |
|---|---|---|
| A | Karte Österreich | 1 |
| B | Karte Österreich | 1 |
| A | Karte Benelux | 3 |
| B | Karte Benelux | 3 |
| A | Karte Dänemark | 1 |
| B | Karte Dänemark | 1 |
| A | Karte Finnland | 1 |
| B | Karte Finnland | 1 |
| A | Karte Frankreich | 1 |
| B | Karte Frankreich | 1 |
| A | Karte Deutschland | 1 |
| B | Karte Deutschland | 1 |
| C | Hotel- und Restaurantführer Deutschland | 2 |
| A | Karte Irland | 1 |
| A | Karte Italien | 1 |
| B | Karte Italien | 1 |
| A | Karte Niederlande | 1 |
| B | Karte Niederlande | 1 |
| D | Verkehrsinformation Großbritannien | 4 |

**Tabelle 2**

| ***Kategorie*** | ***Zeitraum*** | ***Freischalteinheiten*** |
|---|---|---|
| 1 | Tag | 3 |
| 1 | Monat | 20 |
| 2 | Tag | 3 |
| 2 | Monat | 15 |
| 2 | Jahr | 20 |
| 3 | Tag | 3 |
| 3 | Monat | 20 |
| 4 | Tag | 3 |
| 4 | Monat | 20 |

## Patentansprüche

1. Kraftfahrzeug-Informationssystem mit einer zentralen Recheneinheit (1), sowie einer Eingabeeinheit (2), einer Ausgabeeinheit (3, 4) und einem Speichermedium, die jeweils mit der zentralen Recheneinheit (1) verbunden sind, und Mitteln zur Prüfung einer berechtigten Nutzung von Dateien des Speichermediums in dem Informationssystem, **dadurch gekennzeichnet, dass** das Informationssystem ausgebildet ist
- zum Einlesen eines Codes zur Freischaltung von Dateien für eine Nutzung mit dem Informationssystem, wobei der Code Angaben über eine Anzahl verfügbarer Freischalteinheiten enthält,
- zur Anzeige von Dateibezeichnungen und zur Auswahl einer freizuschaltenden Datei durch einen Benutzer
- zur Reduzierung der Anzahl der verfügbaren Freischalteinheiten entsprechend von für die Freischaltung der ausgewählten Datei benötigten Freischalteinheiten.

2. Informationssystem nach Anspruch 1, **dadurch gekennzeichnet, dass** der Code eine Gerätekennung des Informationssystems enthält, insbesondere gerätespezifisch verschlüsselt ist.

3. Informationssystem nach Anspruch 1 oder 2, **dadurch gekennzeichnet, dass** es als Navigationssystem ausgebildet ist oder ein Navigationssystem enthält und die Dateien Landkartendaten enthalten.

4. Informationssystem nach einem der vorhergehenden Ansprüche, **dadurch gekennzeichnet, dass** es als Rundfunkempfänger (9) ausgebildet ist oder einen Rundfunkempfänger (9) enthält und die Dateien kostenpflichtige Verkehrsinformationen enthalten.

5. Informationssystem nach einem der vorhergehenden Ansprüche, **dadurch gekennzeichnet, dass** die Anzahl der verfügbaren Freischalteinheiten verschlüsselt abgespeichert ist.

6. Informationssystem nach einem der vorhergehenden Ansprüche, **dadurch gekennzeichnet, dass** die Dateien in Gruppen zusammengestellt sind und der Code zur Freischaltung von einer oder mehreren Dateien einer der Gruppen berechtigt.

7. Informationssystem nach einem der vorhergehenden Ansprüche, **dadurch gekennzeichnet, dass** die Dateien für auswählbare Zeiträume freischaltbar sind und unterschiedlichen Zeiträumen unterschiedliche Freischalteinheiten zugeordnet sind.

8. Informationssystem nach einem der vorhergehenden Ansprüche, **dadurch gekennzeichnet, dass** das Informationssystem eine Schnittstelle zum Einlesen des Codes von einem externen Gerät enthält.

9. Informationssystem nach einem der vorhergehenden Ansprüche, **dadurch gekennzeichnet, dass** das Informationssystem ein Speicherkartenlesegerät (10) zum Einlesen des Codes von einer Speicherkarte enthält.

10. Informationssystem nach einem der vorhergehenden Ansprüche, **dadurch gekennzeichnet, dass** das Informationssystem ein Mobilfunkmodul zum Einlesen der Codes enthält.

11. Informationssystem nach einem der vorhergehenden Ansprüche, **dadurch gekennzeichnet, dass** das Informationssystem eine abnehmbare Teileinheit mit einem Speichermedium enthält.

12. Informationssystem nach Anspruch 11, **dadurch gekennzeichnet, dass** die abnehmbare Teileinheit eine Frontblende oder Teil einer Frontblende ist.

13. Verfahren zur Freischaltung einer auf einem Speichermedium abgespeicherten Datei zur Nutzung durch ein Kraftfahrzeug-Informationssystems durch Auswertung eines Codes, wobei
- ein erster Code in das Informationssystem eingelesen wird, der eine Gerätekennung des Informationssystems und eine Anzahl von Freischalteinheiten enthält;
- auf einer Anzeigeeinheit des Informationssystems Dateikennzeichnungen zu Dateien angezeigt werden, die mittels des ersten Codes freigeschaltet werden können;
- nach Auswahl einer der Dateien die ausgewählte Datei für die Nutzung mit dem Informationssystem freigeschaltet wird,
- aus dem ersten Code ein zweiter Code generiert wird, der die Gerätekennung und eine zweite Anzahl von Freischalteinheiten enthält, die aus der Anzahl von ersten Freischalteinheiten und von für die Freischaltung der ausgewählten Datei benötigten Freischalteinheiten bestimmt wird
- der zweite Code anstelle des ersten Codes abgespeichert wird.

14. Verfahren nach Anspruch 13, **dadurch gekennzeichnet, dass** das Verfahren in einem Kraftfahrzeug-Navigationssystem und/oder einem Kraftfahrzeug-Rundfunkempfänger durchgeführt wird.

15. Verfahren nach einem der vorhergehenden Ansprüche, **dadurch gekennzeichnet, dass**
- an eine Zentralstelle eine Gerätekennung des Informationssystems und eine gewünschte Anzahl von ersten Freischalteinheiten übertragen wird,
- in der Zentralstelle der erste Code festgelegt wird, der die Gerätekennung und die Anzahl der Freischalteinheiten enthält;
- der erste Code von der Zentralstelle auf ein Speichermedium übertragen wird.

16. Verfahren nach Anspruch 14, **dadurch gekennzeichnet, dass** die Anzahl der Freischalteinheiten verschlüsselt abgespeichert wird.

17. Verfahren nach einem der vorhergehenden Ansprüche, **dadurch gekennzeichnet, dass** die Dateien in Gruppen zusammengestellt sind und der Code eine Kennung für mindestens eine der Gruppen enthält.

18. Verfahren nach einem der vorhergehenden Ansprüche, **dadurch gekennzeichnet, dass** für eine freizuschaltende Datei der Beginn der Freischaltung und der Freischaltzeitraum wählbar ist, wobei die Anzahl der für die Freischaltung benötigten Freischalteinheiten vom Freischaltzeitraum abhängig ist.

19. Verfahren nach einem der vorhergehenden Ansprüche, **dadurch gekennzeichnet, dass** der erste Code von der Zentralstelle über eine Telefonverbindung übertragen wird.

20. Verfahren nach einem der vorhergehenden Ansprüche, **dadurch gekennzeichnet, dass** der erste Code auf einer Speicherkarte abgespeichert wird und von der Speicherkarte in das Informationssystem eingelesen wird.

21. Verfahren nach einem der vorhergehenden Ansprüche, **dadurch gekennzeichnet, dass** der zweite Code an die Zentralstelle zurück übertragen und gelöscht wird.
